# EUROPÄISCHE PATENTSCHRIFT

(11) **EP 3 624 971 B1**
(45) Veröffentlichungstag und Bekanntmachung des Hinweises auf die Patenterteilung: **01.03.2023**
(21) Anmeldenummer: 18727126.7
(22) Anmeldetag: 19.04.2018
(51) Int. Cl.: B23B 27/08, B23B 27/10, B23B 29/04

(54) **SPANNBLOCK ZUR AUFNAHME EINER STECHKLINGE**
CLAMPING BLOCK FOR RECEIVING A PARTING BLADE
BLOC DE SERRAGE CONÇU POUR RECEVOIR UNE LAME DE RAINURAGE

(30) Priorität: 19.05.2017 AT 11517 U
(43) Veröffentlichungstag der Anmeldung: 25.03.2020
(73) Patentinhaber: Ceratizit Austria Gesellschaft m.b.H., 6600 Reutte (AT)
(72) Erfinder: GÖBERL, Christian, 6600 Reutte (AT); SCHLEINKOFER, Uwe, 6600 Reutte (AT)
(74) Vertreter: Ciesla, Dirk
(86) Internationale Anmeldenummer: PCT/AT2018/000027
(87) Internationale Veröffentlichungsnummer: WO 2018/209368

(56) Entgegenhaltungen:
- EP-A1- 2 822 720
- DE-A1- 3 434 653
- DE-A1-102009 060 046
- US-A- 3 731 565

## Beschreibung

Die vorliegende Erfindung betrifft einen Spannblock zur Aufnahme einer Stechklinge mit innerer Kühlmittelzuführung gemäß dem Oberbegriff des Anspruchs 1.

Bei der spanabhebenden Bearbeitung durch Einstechen oder Abstechen ("grooving or parting") kommen häufig Stechklingen (teilweise auch als Stechschwerter bezeichnet) zum Einsatz, die eine plattenartige längliche Form mit zwei großen Seitenflächen, zwei als Einspannabschnitt dienenden langen Längskanten und zwei kürzeren stirnseitigen Querkanten haben. Zumindest an einer Ecke der Stechklinge, die sich zwischen einer der langen Längskanten und einer der stirnseitigen Querkanten befindet, ist üblicherweise ein Schneidenabschnitt mit einem Sitz für einen auswechselbaren Schneideinsatz ausgebildet, in vielen Fällen auch einer gegenüberliegenden Ecke zu der anderen stirnseitigen Querkante ein weiterer Sitz für einen auswechselbaren Schneideinsatz.

Bei der Verwendung derartiger Stechklingen kommen häufig Kühlmittel zum Einsatz, wobei neben einer getrennten Zuführung des Kühlmittels außerhalb der Stechklingen in den Schneidenabschnitt vermehrt eine innere Kühlmittelführung durch die Stechklinge bis zu dem Schneidenabschnitt Verwendung findet.

EP 2 822 720 B1 beschreibt eine Stechklinge und einen entsprechenden Spannblock nach dem Oberbegriff von Anspruch 1, die für die Zuführung von Kühlmittel in den Schneidenabschnitt der Stechklinge über eine innere Kühlmittelzuführung durch die Stechklinge ausgelegt sind. Die Übergabe des Kühlmittels zu der inneren Kühlmittelzuführung in der Stechklinge erfolgt über eine Kühlmittelaustrittsöffnung in der Anlagefläche des Spannblocks, an der die Stechklinge mit einer ihrer Seitenflächen anliegt. Der Spannblock hat eine innere Kühlmittelkanalstruktur, die sich von einer Kühlmitteleintrittsöffnung des Halters zu der Kühlmittelaustrittsöffnung erstreckt. Die Kühlmitteleintrittsöffnung des Halters ist an einer Unterseite des Spannblocks angeordnet und zum Anschluss eines Kühlmittelschlauches ausgebildet.

Es ist Aufgabe der vorliegenden Erfindung, einen verbesserten Spannblock zur Aufnahme einer Stechklinge mit innerer Kühlmittelzuführung bereitzustellen, der insbesondere vielseitig in verschiedensten Einbausituationen und in unterschiedlichen maschinenseitigen Halterungen für den Spannblock einsetzbar ist.

Die Aufgabe wird durch einen Spannblock zur Aufnahme einer Stechklinge mit innerer Kühlmittelzuführung nach Anspruch 1 gelöst. Vorteilhafte Weiterbildungen ergeben sich aus den abhängigen Ansprüchen.

Der Spannblock weist einen Stechklingensitz mit einer Anlagefläche für eine Seitenfläche der Stechklinge und sich auf gegenüberliegenden Längsseiten der Anlagefläche erstreckenden Spannbacken zum Einspannen der Stechklinge an dem Spannblock auf. Der Spannblock ist zur Aufnahme der Stechklinge in einer ersten Einbaurichtung, bei der die Stechklinge mit einem Schneidenabschnitt von einer ersten Stirnseite des Spannblocks hervorsteht, und in einer zweiten Einbaurichtung, bei der die Stechklinge mit dem Schneidenabschnitt von einer der ersten Stirnseite gegenüberliegenden, zweiten Stirnseite des Spannblocks hervorsteht, ausgebildet. An der Anlagefläche ist eine erste Kühlmittelaustrittsöffnung zur Übergabe von Kühlmittel aus dem Spannblock in die Stechklinge bei einem Einbau in der ersten Einbaurichtung und eine zweite Kühlmittelaustrittsöffnung zur Übergabe von Kühlmittel aus dem Spannblock in die Stechklinge bei einem Einbau in der zweiten Einbaurichtung ausgebildet. In dem Spannblock ist eine erste innere Kühlmittelkanalstruktur ausgebildet, über die die erste Kühlmittelaustrittsöffnung mit zumindest zwei verschiedenen ersten Kühlmitteleintrittsöffnungen des Spannblocks kommunizierend verbindbar ist. In dem Spannblock ist ferner eine zweite innere Kühlmittelkanalstruktur ausgebildet, über die die zweite Kühlmittelaustrittsöffnung mit zumindest zwei verschiedenen zweiten Kühlmitteleintrittsöffnungen des Spannblocks kommunizierend verbindbar ist.

Unter einer kommunizierenden Verbindung wird vorliegend das Ausbilden eines durchgängigen Strömungspfads für das Kühlmittel verstanden, sodass kommunizierend verbindbar derart zu verstehen ist, dass ein durchgängiger Strömungspfad von den verschiedenen Kühlmitteleintrittsöffnungen zu der jeweiligen Kühlmittelaustrittsöffnung durch das Innere des Spannblocks ausgebildet werden kann.

Da der Spannblock zur Aufnahme der Stechklinge in der ersten Einbaurichtung und in der zweiten Einbaurichtung ausgelegt ist, werden bereits verschiedene Einbaulagen für die Bearbeitung ermöglicht, bei denen jeweils über die erste Kühlmittelaustrittsöffnung bzw. die zweite Kühlmittelaustrittsöffnung Kühlmittel aus dem Spannblock in die Stechklinge übergeben werden kann. Da die erste innere Kühlmittelkanalstruktur derart ausgebildet ist, dass die erste Kühlmittelaustrittsöffnung mit zumindest zwei verschiedenen ersten Kühlmitteleintrittsöffnungen des Spannblocks kommunizierend verbindbar ist, und die zweite innere Kühlmittelkanalstruktur derart ausgebildet ist, dass die zweite Kühlmittelaustrittsöffnung ebenfalls mit zumindest zwei verschiedenen zweiten Kühlmitteleintrittsöffnungen des Spannblocks kommunizierend verbindbar ist, kann ferner in jeder dieser Einbaulagen - abhängig von den räumlichen Umständen der Einbausituation - eine geeignete der ersten bzw. zweiten Kühlmitteleintrittsöffnungen des Spannblocks für die Kühlmittelzuführung genutzt werden. Die verschiedenen ersten Kühlmitteleintrittsöffnungen können sich bevorzugt an verschiedenen Seiten des Spannblocks befinden. Auch die verschiedenen zweiten Kühlmitteleintrittsöffnungen können sich bevorzugt an verschiedenen Seiten des Spannblocks befinden. In einer besonders vorteilhaften Realisierung können in der konkreten Einbausituation nicht benötigte Kühlmitteleintrittsöffnungen jeweils fluiddicht verschlossen werden, z.B. durch Abdecken, Verschrauben oder ähnliches.

Gemäß einer Weiterbildung ist die erste innere Kühlmittelkanalstruktur derart ausgebildet, dass die erste Kühlmittelaustrittsöffnung mit zumindest drei verschiedenen ersten Kühlmitteleintrittsöffnungen des Spannblocks verbindbar ist, und die zweite innere Kühlmittelkanalstruktur ist derart ausgebildet, dass die zweite Kühlmittelaustrittsöffnung mit zumindest drei verschiedenen zweiten Kühlmitteleintrittsöffnungen des Spannblocks verbindbar ist. In diesem Fall kann der Spannblock noch universeller in verschiedenen Einbausituationen genutzt werden. Auch in diesem Fall können sich bevorzugt zumindest zwei der ersten Kühlmitteleintrittsöffnungen auf verschiedenen Seiten des Spannblocks befinden und zumindest zwei der zweiten Kühlmitteleintrittsöffnungen auf verschiedenen Seiten des Spannblocks befinden.

Gemäß einer Weiterbildung sind die erste innere Kühlmittelkanalstruktur und die zweite innere Kühlmittelkanalstruktur getrennt voneinander ausgebildet. Mit anderen Worten sind die erste innere Kühlmittelkanalstruktur und die zweite innere Kühlmittelkanalstruktur derart getrennt voneinander in dem Spannblock ausgebildet, dass es keinen durchgehenden Strömungspfad für Kühlmittel zwischen der ersten inneren Kühlmittelkanalstruktur und der zweiten inneren Kühlmittelkanalstruktur in dem Spannblock gibt. Dies ermöglicht eine einfache universelle Einsetzbarkeit des Spannblocks, bei der nicht jeweils eine große Anzahl in der konkreten Einbausituation nicht benötigter möglicher Strömungspfade für Kühlmittel verschlossen zu werden braucht.

Gemäß einer Weiterbildung weisen die ersten Kühlmitteleintrittsöffnungen eine Kühlmitteleintrittsöffnung an der zweiten Stirnseite des Spannblocks auf. In diesem Fall kann die Zuführung des Kühlmittels zu dem Spannblock insbesondere auch an der Stirnseite des Spannblocks erfolgen, die von dem gerade genutzten Schneidenabschnitt abgewandt ist. Dies ist vorteilhaft, wenn diese Kühlmitteleintrittsöffnung in der konkreten Einbausituation zugänglich ist. Bevorzugt kann die Kühlmitteleintrittsöffnung an der zweiten Stirnseite zum Anschluss eines Kühlmittelschlauches ausgebildet sein. Die Anschlussmöglichkeit eines Kühlmittelschlauches ist vorteilhaft, weil in diesem Fall keine besonders auf die Kühlmittelversorgung angepasste Ausgestaltung der maschinenseitigen Halterung für den Spannblock nötig ist. Bevorzugt ist die Kühlmitteleintrittsöffnung reversibel verschließbar ausgebildet, sodass sie z.B. mittels einer Schraube oder Ähnlichem verschließbar ist und bei Bedarf wieder freigegeben werden kann.

Gemäß einer Weiterbildung weisen die zweiten Kühlmitteleintrittsöffnungen eine Kühlmitteleintrittsöffnung an der ersten Stirnseite des Spannblocks auf. In diesem Fall kann die Zuführung des Kühlmittels zu dem Spannblock auch bei einem Einbau der Stechklinge in der zweiten Einbaurichtung an der Stirnseite des Spannblocks erfolgen, die von dem gerade genutzten Schneidenabschnitt abgewandt ist. Dies ist vorteilhaft, wenn diese Kühlmitteleintrittsöffnung in der konkreten Einbausituation zugänglich ist. Bevorzugt kann die Kühlmitteleintrittsöffnung an der ersten Stirnseite zum Anschluss eines Kühlmittelschlauches ausgebildet sein.

Gemäß einer Weiterbildung weisen die ersten Kühlmitteleintrittsöffnungen eine Kühlmitteleintrittsöffnung zum Anschluss eines Kühlmittelschlauches an einer Unterseite des Spannblocks auf. In diesem Fall kann eine Kühlmittelzuführung zu dem Spannblock über einen Kühlmittelschlauch auch in Einbausituationen erfolgen, in denen z.B. die zweite Stirnseite des Spannblocks nicht zugänglich ist. Bevorzugt ist auch diese Kühlmitteleintrittsöffnung reversibel verschließbar.

Gemäß einer Weiterbildung weisen die zweiten Kühlmitteleintrittsöffnungen eine Kühlmitteleintrittsöffnung zum Anschluss eines Kühlmittelschlauches an einer Unterseite des Spannblocks auf. In diesem Fall kann auch bei einem Einbau der Stechklinge in der zweiten Einbaurichtung eine Kühlmittelzuführung zu dem Spannblock über einen Kühlmittelschlauch selbst dann erfolgen, wenn z.B. die erste Stirnseite des Spannblocks in der konkreten Einbausituation nicht zugänglich ist.

Gemäß einer Weiterbildung weist der Spannblock einen Einspannabschnitt zur Einspannung in einer maschinenseitigen Halterung für den Spannblock auf und die ersten Kühlmitteleintrittsöffnungen weisen eine an einer Unterseite des Einspannabschnittes ausgebildete Kühlmitteleintrittsöffnung zur direkten Übergabe von Kühlmittel von einer Kühlmittelübergabeöffnung in der Halterung zu dem Spannblock auf. In diesem Fall kann bei einem Einsatz des Spannblocks in einer maschinenseitigen Halterung, die für eine direkte Kühlmittelübergabe ausgelegt ist, eine Übergabe von Kühlmittel in den Spannblock auch ohne Nutzung von separaten Kühlmittelschläuchen erfolgen.

Gemäß einer Weiterbildung weist der Spannblock einen Einspannabschnitt zur Einspannung in einer maschinenseitigen Halterung für den Spannblock auf und die zweiten Kühlmitteleintrittsöffnungen weisen eine an einer Unterseite des Einspannabschnittes ausgebildete Kühlmitteleintrittsöffnung zur direkten Übergabe von Kühlmittel von einer Kühlmittelübergabeöffnung in der Halterung zu dem Spannblock auf. In diesem Fall kann bei der Verwendung einer entsprechend ausgelegten maschinenseitigen Halterung für den Spannblock auch in der zweiten Einbaurichtung der Stechklinge eine Kühlmittelübergabe erfolgen, ohne dass zusätzlich Kühlmittelschläuche erforderlich sind.

Gemäß einer Weiterbildung ist die an der Unterseite des Einspannabschnittes ausgebildete Kühlmitteleintrittsöffnung länglich ausgebildet. In diesem Fall kann eine zuverlässige direkte Übergabe von Kühlmittel aus der maschinenseitigen Halterung in den Spannblock auch für unterschiedliche relative Positionierungen zwischen maschinenseitiger Halterung und Spannblock in der Längsrichtung erfolgen. Ferner ermöglicht diese Ausgestaltung eine Nutzung der direkten Kühlmittelübergabe von der maschinenseitigen Halterung zu dem Spannblock auch bei verschiedenen auf dem Markt befindlichen maschinenseitigen Halterungen, bei denen die Kühlmittelübergabeöffnungen in der Halterung unterschiedlich ausgebildet sind. Bevorzugt kann die länglich ausgebildete Kühlmitteleintrittsöffnung an der Unterseite des Einspannabschnittes dabei in Form einer Reservoirkammer ausgebildet sein. Eine Längsachse der länglichen Erstreckung verläuft bevorzugt in Richtung von der ersten Stirnseite zu der zweiten Stirnseite des Spannblocks.

Gemäß einer Weiterbildung ist die an der Unterseite des Einspannabschnittes ausgebildete Kühlmitteleintrittsöffnung von einer umlaufenden Nut umgeben, in der ein elastisches Dichtelement angeordnet ist. In diesem Fall ist eine zuverlässige direkte Übergabe von Kühlmittel von der maschinenseitigen Halterung zu dem Spannblock - ohne der Gefahr eines Kühlmittellecks - auch bei hohen zum Einsatz kommenden Kühlmitteldrücken sichergestellt.

Gemäß einer Weiterbildung ist die erste Kühlmittelaustrittsöffnung länglich ausgebildet ist. Auch in diesem Fall ist die längliche Erstreckung vorzugsweise in der Richtung von der ersten Stirnseite zu der zweiten Stirnseite des Spannblocks gegeben. Diese Ausgestaltung ermöglicht eine zuverlässige Übergabe von Kühlmittel in die Stechklinge für verschiedene relative Positionierungen zwischen Stechklinge und Spannblock, sodass eine Einstellbarkeit bezüglich der Länge, mit der die Stechklinge von dem Spannblock hervorsteht, gegeben ist. Die zweite Kühlmittelaustrittsöffnung kann bevorzugt in entsprechender Weise länglich ausgebildet sein.

Gemäß einer Weiterbildung ist die erste Kühlmittelaustrittsöffnung von einer umlaufenden Nut umgeben, in der ein elastisches Dichtelement angeordnet ist. In diesem Fall ist eine zuverlässige Kühlmittelübergabe von dem Spannblock zu der Stechklinge auch bei hohem Kühlmitteldruck gegeben. Die zweite Kühlmittelaustrittsöffnung kann bevorzugt auch von einer umlaufenden Nut umgeben sein, in der ein elastisches Dichtelement angeordnet ist.

Bevorzugt kann eine erste Spannbacke der Spannbacken zum Einspannen der Stechklingen einstückig und fest mit dem die Klingenanlagefläche aufweisenden Bereich des Spannblocks ausgebildet sein und eine zweite Spannbacke der Spannbacken relativ zu der ersten Spannbacke beweglich ausgebildet sein, was eine besonders zuverlässige und sichere Klemmung der Stechklinge ermöglicht. Auch die zweite Spannbacke kann dabei z.B. einstückig mit dem Rest des Spannblocks, aber elastisch auslenkbar, oder aber auch getrennt von dem Rest des Spannblocks ausgebildet sein. In einer bevorzugten Ausgestaltung können die erste Kühlmittelaustrittsöffnung und bevorzugt auch die zweite Kühlmittelaustrittsöffnung jeweils näher zu der ersten Spannbacke als zu der zweiten Spannbacke angeordnet sein. In diesem Fall wird eine besonders gute Abdichtung der Kühlmittelübergabe zwischen Spannblock und Stechklinge erreicht.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine schematische Seitenansicht einer Stechklinge mit innerer Kühlmittelzuführung;
- Fig. 2:: eine schematische Aufsicht der Stechklinge von Fig. 1;
- Fig. 3:: eine schematische Schnittdarstellung der Stechklinge entlang der Linie A-A in Fig. 2;
- Fig. 4:: eine schematische perspektivische Darstellung eines Spannblocks gemäß einer Ausführungsform;
- Fig. 5:: eine weitere schematische perspektivische Darstellung des Spannblocks aus einer anderen Richtung;
- Fig. 6:: eine schematische Draufsicht auf eine Unterseite des Spannblocks;
- Fig. 7:: eine schematische Draufsicht auf eine Anlagefläche zur Aufnahme einer Stechklinge bei dem Spannblock;
- Fig. 8:: eine schematische Seitenansicht einer ersten Stirnseite des Spannblocks;
- Fig. 9:: eine schematische Seitenansicht einer zweiten Stirnseite des Spannblocks;
- Fig. 10:: eine schematische perspektivische Darstellung des Spannblocks, bei der eine zweite innere Kühlmittelkanalstruktur in dem Spannblock schematisch dargestellt ist;
- Fig. 11:: eine schematische Draufsicht auf die Unterseite des Spannblocks, bei der die Elemente der zweiten inneren Kühlmittelkanalstruktur schematisch dargestellt sind;
- Fig. 12:: eine schematische Draufsicht auf die Oberseite des Spannblocks, bei der die Elemente der zweiten inneren Kühlmittelkanalstruktur schematisch dargestellt sind;
- Fig. 13:: eine schematische Seitenansicht der ersten Stirnseite des Spannblocks, bei der Elemente der zweiten inneren Kühlmittelkanalstruktur schematisch dargestellt sind;
- Fig. 14:: eine schematische Draufsicht auf die Unterseite des Spannblocks, bei der die Elemente einer ersten inneren Kühlmittelkanalstruktur schematisch dargestellt sind;
- Fig. 15:: eine schematische Seitenansicht der zweiten Stirnseite des Spannblocks, bei der Elemente der ersten inneren Kühlmittelkanalstruktur schematisch dargestellt sind;
- Fig. 16:: eine schematische Draufsicht auf die Anlagefläche für die Stechklinge bei dem Spannblock, bei der sowohl die Elemente der ersten inneren Kühlmittelkanalstruktur als auch die Elemente der zweiten inneren Kühlmittelkanalstruktur schematisch dargestellt sind;
- Fig. 17:: eine schematische Darstellung des Spannblocks in einem eingebauten Zustand in einer maschinenseitigen Halterung;
- Fig. 18:: eine schematische Darstellung der einer maschinenseitigen Halterung aus Fig. 17 ohne eingebauten Spannblock; und
- Fig. 19:: eine schematische Darstellung einer maschinenseitigen Halterung für eine zu der maschinenseitigen Halterung aus Fig. 18 entgegengesetzte Einbaulage.

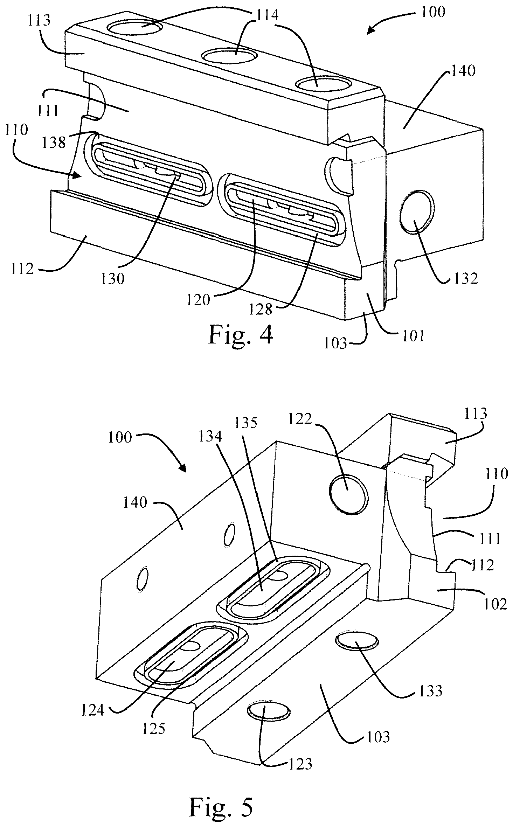

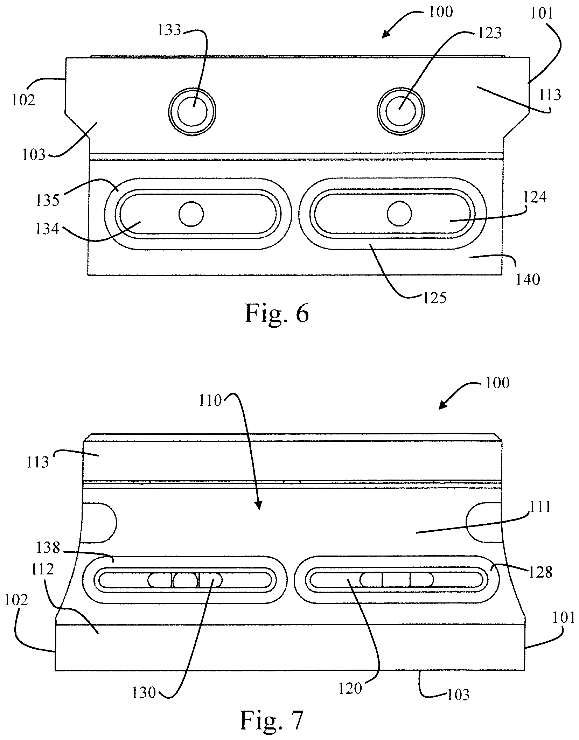

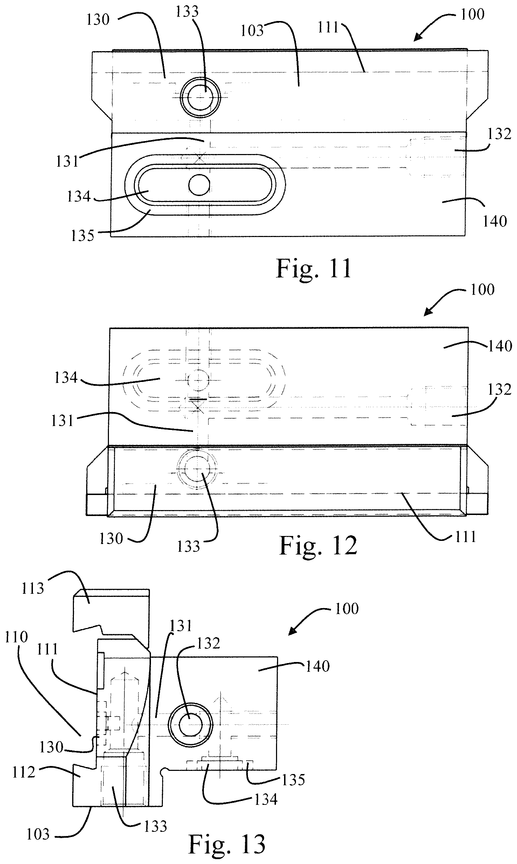

Eine Ausführungsform eines Spannblocks 100 zur Aufnahme einer Stechklinge 200 mit innerer Kühlmittelführung 210 wird im Folgenden unter Bezugnahme auf die Fig. 4 bis Fig. 17 beschrieben.

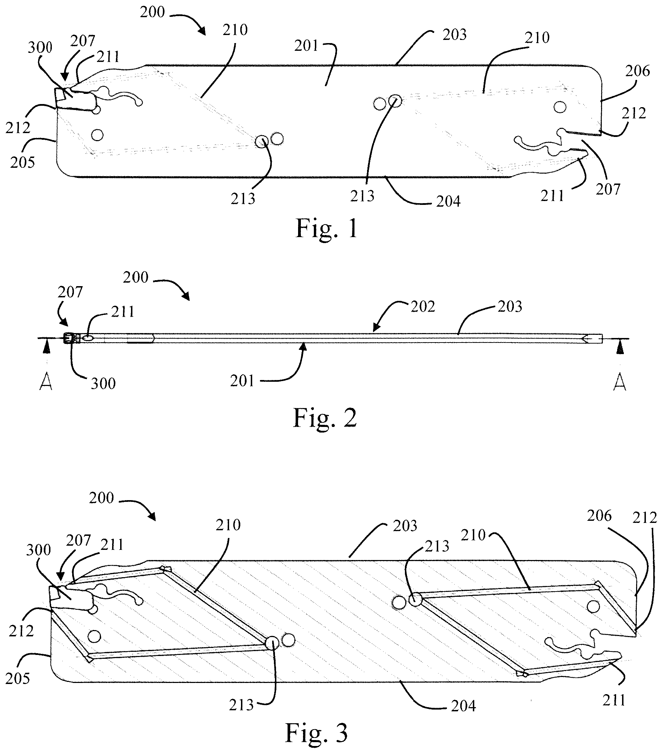

Zunächst wird unter Bezug auf die Fig. 1 bis Fig. 3 die Ausgestaltung einer Stechklinge 200 mit innerer Kühlmittelführung beschrieben, für deren Aufnahme der Spannblock 100 gemäß der Ausführungsform ausgebildet ist.

Die Stechklinge 200 weist in der üblichen Weise eine plattenartige längliche Form mit zwei großen Seitenflächen 201, 202, zwei als Einspannabschnitt dienenden langen Längskanten 203, 204 und zwei kürzeren stirnseitigen Querkanten 205, 206 auf. An einer Ecke der Stechklinge 200, die sich zwischen einer langen Längskante 203 und einer stirnseitigen Querkante 205 befindet, ist ein Schneidenabschnitt 207 mit einem Sitz für einen auswechselbaren Schneideinsatz 300 ausgebildet. Bei dem konkret dargestellten Beispiel ist an einer gegenüberliegenden Ecke zu der anderen stirnseitigen Querkante 206 ein weiterer Schneidenabschnitt 207 mit einem Sitz für einen auswechselbaren Schneideinsatz ausgebildet. Die langen Längskanten 203, 204 weisen in einer Dickenrichtung der Stechklinge 200 ein dachförmiges Profil auf, wie in der Darstellung von Fig. 2 zu erkennen ist.

Wie in den Fig. 1 und Fig. 3 zu sehen ist, ist die Stechklinge 200 mit einer inneren Kühlmittelführung 210 versehen, über die Kühlmittel in den Bereich des Schneidenabschnitts 207 zugeführt werden kann. Bei dem dargestellten Beispiel ist die Kühlmittelführung 210 dazu ausgebildet, Kühlmittel sowohl in den Bereich der Spanfläche als auch in den Bereich der Freifläche zu dem Schneidenabschnitt 207 zuzuführen, wozu an dem Schneidenabschnitt 207 ein spanflächenseitiger Kühlmittelaustritt 211 und ein freiflächenseitiger Kühlmittelaustritt 212 vorgesehen sind. In einer alternativen Ausgestaltung ist es aber auch möglich, z.B. nur den spanflächenseitigen Kühlmittelaustritt 211 oder nur den freiflächenseitigen Kühlmittelaustritt 212 vorzusehen.

Die innere Kühlmittelführung 210 ist durch Bohrungen in dem Inneren der Stechklinge 200 ausgebildet. In der schematischen Darstellung sind für eine Ausbildung der inneren Kühlmittelführung 210 zunächst gebildete und anschließend wieder verschlossene Verbindungsbohrungen zu den Längskanten 203, 204 zur Vereinfachung der Darstellung nicht gezeigt. Um eine Übergabe von Kühlmittel in die innere Kühlmittelführung 210 der Stechklinge 200 zu ermöglichen, ist in zumindest einer der beiden Seitenflächen 201, 202 der Stechklinge 200 eine Einlassöffnung 213 ausgebildet. Bei dem konkret dargestellten Beispiel ist die Einlassöffnung 213 durch eine Durchgangsbohrung gebildet, die sich durchgehend von der ersten Seitenfläche 201 zu der zweiten Seitenfläche 202 erstreckt und es ist vorgesehen, die von dem im Folgenden eingehender beschriebenen Spannblock 100 abgewandte Seite dieser Durchgangsbohrung im Betrieb zu verschließen, was z.B. durch eine entsprechende Schraube mit Dichtring oder Ähnliches erfolgen kann. Bei der dargestellten Ausführungsform werden der spanflächenseitige Kühlmittelaustritt 211 und der freiflächenseitige Kühlmittelaustritt 212 beide über dieselbe Einlassöffnung 213 und eine entsprechende Verzweigung der Bohrungen der inneren Kühlmittelführung 210 mit Kühlmittel versorgt. Obwohl vorliegend der Begriff Bohrungen verwendet wird, müssen diese nicht zwingend durch eine Bohrbearbeitung ausgebildet werden, sondern können z.B. auch durch Erodieren in der Stechklinge 200 ausgebildet werden.

Für den dargestellten Fall, dass die Stechklinge 200 einen weiteren Schneidenabschnitt 207 aufweist, kann eine entsprechend ausgebildete zweite innere Kühlmittelführung 210 zum Zuführen von Kühlmittel zu diesem weiteren Schneidenabschnitt 207 in der Stechklinge 200 ausgebildet sein, dies ist jedoch nicht zwingend erforderlich.

Im Folgenden wird der Spannblock 100 zur Aufnahme der Stechklinge 200 unter Bezugnahme auf die Fig. 4 bis Fig. 17 eingehender beschrieben.

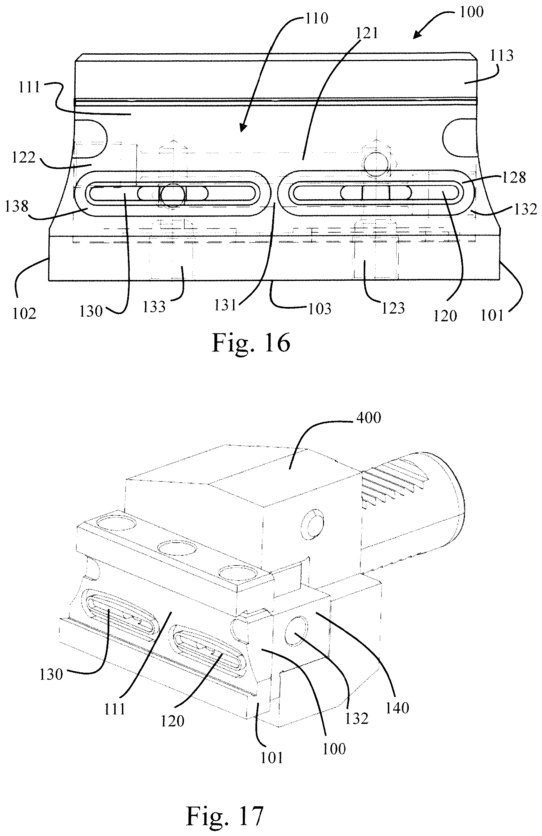

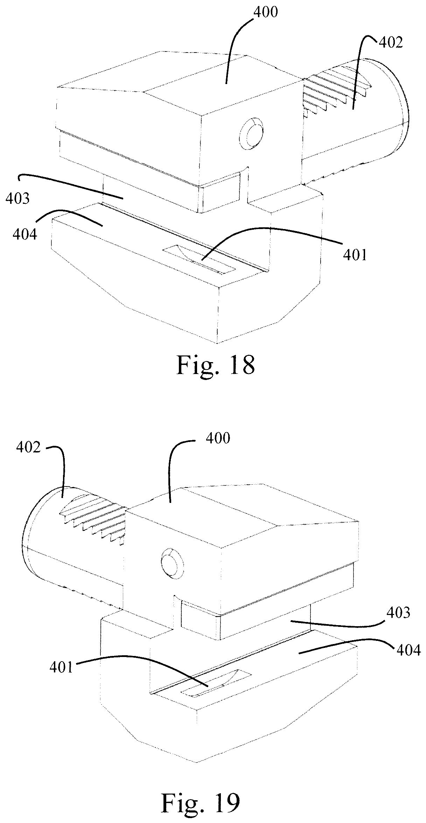

Der Spannblock 100 zur Aufnahme der Stechklinge 200 weist einen Stechklingensitz 110 auf, an dem die zuvor beschriebene Stechklinge 200 eingespannt werden kann. An der von dem Stechklingensitz 110 abgewandten Seite weist der Spannblock 100 einen Einspannabschnitt 140 zum Einspannen des Spannblocks 100 in einer maschinenseitigen Halterung 400 auf, die in den Fig. 17, Fig. 18 und Fig. 19 schematisch dargestellt ist. Die maschinenseitige Halterung 400 weist eine Befestigungsschnittstelle 402 zur Befestigung in einer Werkzeugmaschine und einen Halteabschnitt 403, an dem der Spannblock 100 eingespannt werden kann, auf. In den Fig. 17 und Fig. 18 ist eine maschinenseitige Halterung 400 für eine erste Einbaulage dargestellt. In der Fig. 19 ist eine maschinenseitige Halterung 400 für eine zu der ersten Einbaulage entgegengesetzte Einbaulage dargestellt. Der Spannblock 100 gemäß der Ausführungsform ist derart ausgelegt, dass er flexibel sowohl in der maschinenseitigen Halterung für die erste Einbaulage als auch in der maschinenseitigen Halterung für die entgegengesetzte zweite Einbaulage eingesetzt werden kann.

Der Stechklingensitz 110 weist in an sich bekannter Weise eine Anlagefläche 111 für eine der Seitenflächen 201, 202 der Stechklinge 200 auf. Auf gegenüberliegenden Längsseiten der Anlagefläche 111, d.h. zur Oberseite und Unterseite 103 des Spannblocks 100 hin, erstrecken sich Spannbacken 112, 113 zum Einspannen der Stechklinge 200 entlang der Anlagefläche 111. Bei der dargestellten Ausführungsform ist eine erste Spannbacke 112 einstückig mit dem Rest des Spannblocks 200, an dem die Anlagefläche 111 ausgebildet ist, ausgeführt und eine zweite Spannbacke 113 ist relativ zu der ersten Spannbacke 112 beweglich ausgeführt. Bei der Ausführungsform kann dabei insbesondere die zweite Spannbacke 113 über eine Mehrzahl von Schrauben 114 in Richtung der ersten Spannbacke 112 gespannt werden. Die einander zugewandten, an die Anlagefläche 111 angrenzenden Klemmflächen der Spannbacken 112, 113 sind leicht schräg ausgeführt, sodass die Stechklinge 200 in Richtung der Anlagefläche 111 gespannt werden kann, indem die Spannbacken 112, 113 auf die dachförmigen Längsseiten 203, 204 der Stechklinge 200 einwirken.

In Richtung einer ersten Stirnseite 101 des Spannblocks 100 und ebenso in Richtung einer zweiten Stirnseite 102 des Spannblocks 100 ist die Anlagefläche 111 seitlich nicht begrenzt, sondern läuft frei aus, sodass die Stechklinge 200 derart in einer ersten Einbaurichtung in dem Stechklingensitz 110 angeordnet werden kann, dass sie mit dem Schneidenabschnitt 207 von der ersten Stirnseite 101 des Spannblocks 100 hervorsteht, und auch in einer zweiten Einbaurichtung in dem Stechklingensitz 110 angeordnet werden kann, dass sie mit dem Schneidenabschnitt 207 von der zweiten Stirnseite 102 des Spannblocks 100 hervorsteht. Es ist dabei zu beachten, dass die Stechklinge 200 je nach konkreter Ausgestaltung der Stechklinge 200 und des Spannblocks 100 auch bei einer Anordnung in der ersten Einbaurichtung zusätzlich auch mit der von dem aktiven Schneidenabschnitt 207 abgewandten anderen Querkante 205, an der ggfs. auch ein weiterer Schneidenabschnitt ausgebildet sein kann, von der zweiten Stirnseite 102 des Spannblocks 100 hervorstehen kann. Dasselbe gilt in umgekehrter Weise für einen Einbau der Stechklinge 200 in der zweiten Einbaurichtung. Der Stechklingensitz 110 ist derart ausgebildet, dass die Länge, mit der die Stechklinge 200 von dem Spannblock 100 hervorsteht, verändert werden kann, indem die Stechklinge 200 im nicht angespannten Zustand der Spannbacken 112, 113 in der Längsrichtung relativ zu dem Spannblock 100 verschoben werden kann.

Wie insbesondere in den Fig. 4, Fig. 7 und Fig. 15 bis Fig. 17 zu sehen ist, ist an der Anlagefläche 111 eine erste Kühlmittelaustrittsöffnung 120 zur Übergabe von Kühlmittel zu der inneren Kühlmittelführung 210 der Stechklinge 200, wenn sich diese in der ersten Einbaurichtung befindet, vorgesehen. Die erste Kühlmittelaustrittsöffnung 120 ist derart an der Anlagefläche 111 ausgebildet, dass sie die Einlassöffnung 213 der inneren Kühlmittelführung 210 in der Stechklinge 200 mit Kühlmittel versorgen kann. Die erste Kühlmittelaustrittsöffnung 120 ist in Richtung von der ersten Stirnseite 101 zu der zweiten Stirnseite 102 des Spannblocks 100 länglich ausgebildet. Mit anderen Worten hat die erste Kühlmittelaustrittsöffnung 120 an der Anlagefläche 111 die Form eines Langlochs mit einer länglichen Erstreckung im Wesentlichen parallel zu den Spannbacken 112, 113. Die erste Kühlmittelaustrittsöffnung 120 ist von einer umlaufenden Nut 128 umgeben, in der im Einsatz ein (nicht dargestelltes) elastisches Dichtelement aufgenommen ist. Aufgrund der länglichen Gestaltung der ersten Kühlmittelaustrittsöffnung 120 kann Kühlmittel zuverlässig zu der Einlassöffnung 213 der Stechklinge 200 übergeben werden, auch wenn deren relative Position zu dem Spannblock 100 in der Längsrichtung in einem vorgegebenen zulässigen Bereich verändert wird. Über das in der umlaufenden Nut 128 angeordnete elastische Dichtelement wird dabei ein unerwünschtes Austreten von Kühlmittel auch bei hohen Kühlmitteldrücken zuverlässig verhindert, wenn die Stechklinge 200 über die Spannbacken 112, 113 gegen die Anlagefläche 111 gespannt wird. Wie in den Figuren zu sehen ist, ist die erste Kühlmittelaustrittsöffnung 120 als eine Reservoirkammer mit einem vergrößerten Querschnitt gegenüber dem Rest der in dem Spannblock 100 ausgebildeten ersten inneren Kühlmittelkanalstruktur 121 ausgebildet, die im Folgenden noch eingehender beschrieben wird.

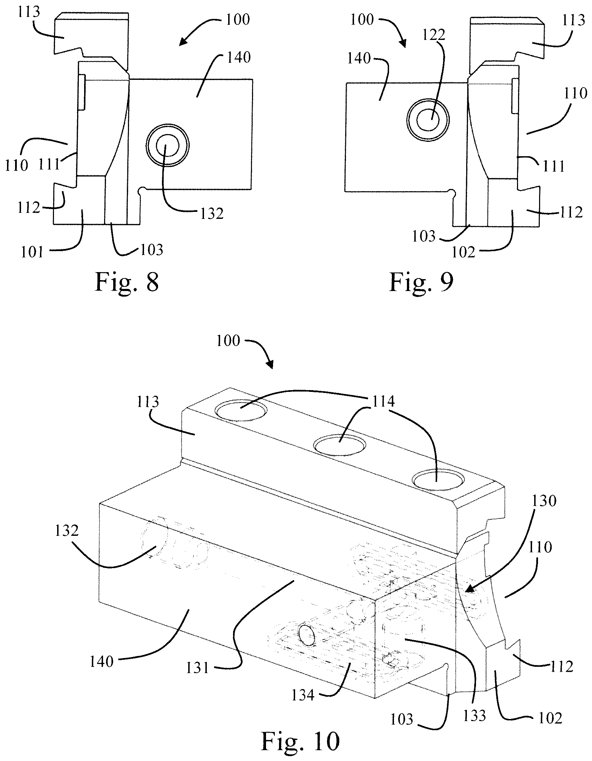

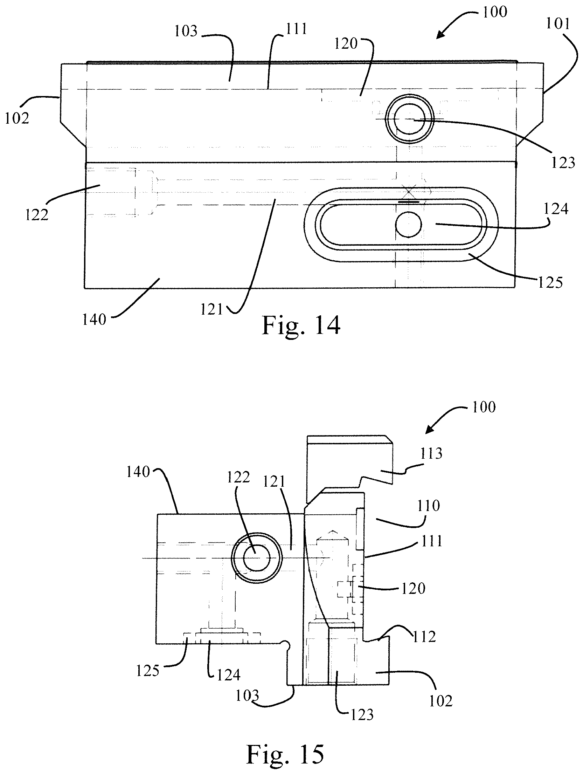

In dem Spannblock 100 ist eine erste innere Kühlmittelkanalstruktur 121 ausgebildet, über die die erste Kühlmittelaustrittsöffnung 120 mit einer Mehrzahl von ersten Kühlmitteleintrittsöffnungen 122, 123, 124 des Spannblocks unter Ausbildung eines Strömungspfads verbunden ist. In dieser Weise kann die erste Kühlmittelaustrittsöffnung 120 über verschiedene Kühlmitteleintrittsöffnungen 122, 123, 124 mit Kühlmittel versorgt werden, wie im Folgenden eingehender beschrieben wird. Obwohl der Spannblock 100 bei der Ausführungsform sowohl eine erste innere Kühlmittelkanalstruktur 121 aufweist, die der ersten Kühlmittelaustrittsöffnung 120 zugeordnet ist, als auch eine zweite innere Kühlmittelkanalstruktur 131, die einer zweiten Kühlmittelaustrittsöffnung 130 zugeordnet ist, wie insbesondere in Fig. 16 schematisch dargestellt ist, ist in den Fig. 14 und Fig. 15 zur Vereinfachung der Erklärung und zur besseren Erkennbarkeit nur die erste innere Kühlmittelkanalstruktur 121 schematisch dargestellt und in den Fig. 10 bis Fig. 13 ist nur die zweite innere Kühlmittelkanalstruktur 131 schematisch dargestellt.

Wie in Fig. 5, Fig. 9 und Fig. 14 bis Fig. 16 zu sehen ist, ist eine Kühlmitteleintrittsöffnung 122 der ersten Kühlmitteleintrittsöffnungen 122, 123, 124 des Spannblocks 100 an der zweiten Stirnseite 102 des Spannblocks 100 ausgebildet. Diese stirnseitige Kühlmitteleintrittsöffnung 122 ist zum Anschluss eines Kühlmittelschlauches ausgebildet und kann in einfacher Weise mittels einer Schraube verschlossen werden, wenn sie in der konkreten Einbausituation nicht benötigt wird. Eine weitere Kühlmitteleintrittsöffnung 123 der ersten Kühlmitteleintrittsöffnungen 122, 123, 124 ist an der Unterseite 103 des Spannblocks 100 in einem von dem Einspannabschnitt 140 verschiedenen Bereich angeordnet, wie in den Fig. 5, Fig. 6 und Fig. 14 bis Fig. 16 zu sehen ist. Auch diese weitere Kühlmitteleintrittsöffnung 123 ist zum Anschluss eines Kühlmittelschlauchs ausgebildet und kann in einfacher Weise mittels einer Schraube verschlossen werden, wenn sie in der konkreten Einbausituation nicht benötigt wird. Wie insbesondere in den Fig. 5, Fig. 6 und Fig. 14 bis Fig. 16 zu sehen ist, ist noch eine weitere Kühlmitteleintrittsöffnung 124 der Mehrzahl von ersten Kühlmitteleintrittsöffnungen 122, 123, 124 an der Unterseite des Einspannabschnittes 140 ausgebildet, der zum Einspannen des Spannblocks 100 an der maschinenseitigen Halterung 400 dient. Diese Kühlmitteleintrittsöffnung 124 ist, ähnlich zu der ersten Kühlmittelaustrittsöffnung 120, in Richtung von der ersten Stirnseite 101 zu der zweiten Stirnseite 102 des Spannblocks 100 länglich ausgebildet. Die Kühlmitteleintrittsöffnung 124 an der Unterseite des Einspannabschnittes 140 ist von einer umlaufenden Nut 125 umgeben, in der ein (nicht dargestelltes) elastisches Dichtelement angeordnet ist. Die ersten Kühlmitteleintrittsöffnungen 122, 123 und 124 sind über die durch eine Mehrzahl von Bohrungen gebildete erste innere Kühlmittelkanalstruktur 121 in dem Spannblock 100 mit der ersten Kühlmittelaustrittsöffnung 120 kommunizierend verbunden. Wenn der Spannblock 100 in einer maschinenseitigen Halterung zum Einsatz kommt, bei der die Auflagefläche 404 für die Unterseite des Einspannabschnittes 140 mit einer Kühlmittelübergabeöffnung 401 versehen ist, über die Kühlmittel zu der Kühlmitteleintrittsöffnung 124 übergeben werden kann, wie in den Fig. 18 und Fig. 19 schematisch dargestellt ist, kann mit dem beschriebenen Spannblock 100 diese Möglichkeit der direkten Kühlmittelübergabe von der maschinenseitigen Halterung 400 zu dem Spannblock 100 genutzt werden und die beiden anderen ersten Kühlmitteleintrittsöffnungen 122 und 123 können verschlossen werden. Aufgrund der Ausgestaltung der Kühlmitteleintrittsöffnung 124 als längliche Vertiefung, sodass eine längliche Reservoirkammer ausgebildet ist, kann dabei bei zuverlässig bei verschiedenen auf dem Markt befindlichen maschinenseitigen Halterungen 400, bei denen die Kühlmittelübergabeöffnungen 401 unterschiedlich ausgestaltet sind, die direkte Kühlmittelübergabe genutzt werden.

Bei der Verwendung einer maschinenseitigen Halterung, die keine solche Kühlmittelübergabeöffnung vorsieht, kann Kühlmittel über die Nutzung einer der beiden anderen ersten Kühlmitteleintrittsöffnungen 122, 123 zu der ersten Kühlmittelaustrittsöffnung 120 zugeführt werden, wobei die jeweils nicht benötigte verschlossen werden kann. Die Kühlmitteleintrittsöffnung 124 an der Unterseite des Einspannabschnittes 140 wird in diesem Fall über das in der umlaufenden Nut 125 angeordnete elastische Dichtelement gegenüber der maschinenseitigen Halterung dichtend verschlossen. Die Auswahl der zu verwendenden Kühlmitteleintrittsöffnung kann dabei flexibel in Abhängigkeit von der konkreten Einbausituation erfolgen.

Über die Mehrzahl der ersten Kühlmitteleintrittsöffnungen 122, 123, 124, die alle über die erste innere Kühlmittelkanalstruktur 121 mit der ersten Kühlmittelaustrittsöffnung 120 verbindbar sind, kann die in der ersten Einbaurichtung an dem Spannblock 100 befestigte Stechklinge 200 somit flexibel an die konkrete Einbausituation anpassbar mit Kühlmittel versorgt werden.

Wie oben bereits beschrieben wurde, ist der Spannblock 100 gemäß der Ausführungsform auch zur Aufnahme der Stechklinge 200 in einer zweiten Einbaurichtung, bei der die Stechklinge 200 mit dem aktiven Schneidenabschnitt 207 von der zweiten Stirnseite 102 des Spannblocks 100 hervorsteht ausgebildet.

Wie insbesondere in den Fig. 4, Fig. 7, Fig. 10 bis Fig. 13, Fig. 16 und Fig. 17 zu sehen ist, ist an der Anlagefläche 111 auch eine zweite Kühlmittelaustrittsöffnung 130 zur Übergabe von Kühlmittel zu der inneren Kühlmittelführung 210 der Stechklinge 200, wenn sich diese in der zweiten Einbaurichtung befindet, vorgesehen. Auch die zweite Kühlmittelaustrittsöffnung 130 ist derart an der Anlagefläche 111 ausgebildet, dass sie die Einlassöffnung 213 der inneren Kühlmittelführung 210 in der Stechklinge 200 mit Kühlmittel versorgen kann. In ihrer Ausgestaltung ist die zweite Kühlmittelaustrittsöffnung 130 wie die erste Kühlmittelaustrittsöffnung 120 ausgebildet, insbesondere auch von einer umlaufenden Nut 138 umgeben, in der ein (nicht dargestelltes) elastisches Dichtelement angeordnet ist, wie es oben beschrieben wurde.

Die zweite Kühlmittelaustrittsöffnung 130 ist über eine zweite innere Kühlmittelkanalstruktur 131 mit einer Mehrzahl von zweiten Kühlmitteleintrittsöffnungen 132, 133, 134 des Spannblocks 100 verbunden, wie in den Fig. 10 bis Fig. 13 und Fig. 16 schematisch dargestellt ist. Eine Kühlmitteleintrittsöffnung 132 der ersten Kühlmitteleintrittsöffnungen 132, 133, 134 des Spannblocks 100 ist an der ersten Stirnseite 101 des Spannblocks 100 ausgebildet. Diese stirnseitige Kühlmitteleintrittsöffnung 132 ist zum Anschluss eines Kühlmittelschlauches ausgebildet und kann in einfacher Weise mittels einer Schraube verschlossen werden, wenn sie in der konkreten Einbausituation nicht benötigt wird. Eine weitere Kühlmitteleintrittsöffnung 133 ist an der Unterseite 103 des Spannblocks 100 in einem von dem Einspannabschnitt 140 verschiedenen Bereich angeordnet. Auch diese weitere Kühlmitteleintrittsöffnung 133 ist zum Anschluss eines Kühlmittelschlauchs ausgebildet und kann in einfacher Weise mittels einer Schraube verschlossen werden, wenn sie in der konkreten Einbausituation nicht benötigt wird. Wie auch bereits in Bezug auf die erste innere Kühlmittelkanalstruktur 121 beschrieben wurde, ist auch bei der zweiten inneren Kühlmittelkanalstruktur 131 noch eine weitere Kühlmitteleintrittsöffnung 134 der an der Unterseite des Einspannabschnittes 140 ausgebildet, der zum Einspannen des Spannblocks 100 an einer maschinenseitigen Halterung 400 dient. Diese weitere Kühlmitteleintrittsöffnung 134 ist wiederum länglich ausgeführt und von einer umlaufenden Nut 135 umgeben, in der ein (nicht dargestelltes) elastisches Dichtelement aufgenommen ist. Aufgrund dieser Ausgestaltung, bei der auch die zweite Kühlmittelaustrittsöffnung 130 mit einer Mehrzahl von zweiten Kühlmitteleintrittsöffnungen 132, 133, 134 verbunden ist, stehen somit auch bei der Aufnahme der Stechklinge 200 in der zweiten Einbaurichtung die flexiblen Möglichkeiten der Zuführung von Kühlmittel zur Verfügung, die bereits oben in Bezug auf die erste Einbaurichtung beschrieben wurden. Ferner kann der Spannblock 100 in besonders flexibler Weise auch in den verschiedenen maschinenseitigen Halterungen für verschiedene Montagerichtung verwendet werden.

Wie aus den Figuren ersichtlich ist, sind die erste innere Kühlmittelkanalstruktur 121 und die zweite innere Kühlmittelkanalstruktur 131 getrennt voneinander in dem Spannblock 100 ausgebildet. Bei der Ausführungsform ist dies durch eine Anordnung der Bohrungen für die erste innere Kühlmittelkanalstruktur 121 und die zweite innere Kühlmittelkanalstruktur 131 derart, dass sie versetzt zueinander ausgebildet sind, realisiert.

## Patentansprüche

1. Spannblock (100) zur Aufnahme einer Stechklinge mit innerer Kühlmittelführung, wobei der Spannblock aufweist:
einen Stechklingensitz (110) mit einer Anlagefläche (111) für eine Seitenfläche der Stechklinge und sich auf gegenüberliegenden Längsseiten der Anlagefläche (111) erstreckenden Spannbacken (112, 113) zum Einspannen der Stechklinge an dem Spannblock,
wobei der Spannblock (100) zur Aufnahme der Stechklinge in einer ersten Einbaurichtung, bei der die Stechklinge mit einem Schneidenabschnitt von einer ersten Stirnseite (101) des Spannblocks hervorsteht, und in einer zweiten Einbaurichtung, bei der die Stechklinge mit dem Schneidenabschnitt von einer der ersten Stirnseite (101) gegenüberliegenden, zweiten Stirnseite (102) des Spannblocks hervorsteht, ausgebildet ist,
wobei an der Anlagefläche (111) eine erste Kühlmittelaustrittsöffnung (120) zur Übergabe von Kühlmittel aus dem Spannblock (100) in die Stechklinge bei einem Einbau in der ersten Einbaurichtung und eine zweite Kühlmittelaustrittsöffnung (130) zur Übergabe von Kühlmittel aus dem Spannblock (100) in die Stechklinge bei einem Einbau in der zweiten Einbaurichtung ausgebildet sind,
**dadurch gekennzeichnet, dass** der Spannblock (100) zumindest zwei verschiedene erste Kühlmitteleintrittsöffnungen (122, 123, 124) aufweist und in dem Spannblock (100) eine erste innere Kühlmittelkanalstruktur (121) ausgebildet ist, über die die erste Kühlmittelaustrittsöffnung (120) mit den zumindest zwei verschiedenen ersten Kühlmitteleintrittsöffnungen (122, 123, 124) des Spannblocks (100) kommunizierend verbindbar ist,
und wobei der Spannblock (100) zumindest zwei verschiedene zweite Kühlmitteleintrittsöffnungen (132, 133, 134) aufweist und in dem Spannblock (100) eine zweite innere Kühlmittelkanalstruktur (131) ausgebildet ist, über die die zweite Kühlmittelaustrittsöffnung (130) mit den zumindest zwei verschiedenen zweiten Kühlmitteleintrittsöffnungen (132, 133, 134) des Spannblocks (100) kommunizierend verbindbar ist.

2. Spannblock nach Anspruch 1, wobei die erste innere Kühlmittelkanalstruktur (121) derart ausgebildet ist, dass die erste Kühlmittelaustrittsöffnung (120) mit zumindest drei verschiedenen ersten Kühlmitteleintrittsöffnungen (122, 123, 124) des Spannblocks (100) verbindbar ist, und
die zweite innere Kühlmittelkanalstruktur (131) derart ausgebildet ist, dass die zweite Kühlmittelaustrittsöffnung (130) mit zumindest drei verschiedenen zweiten Kühlmitteleintrittsöffnungen (132, 133, 134) des Spannblocks (100) verbindbar ist.

3. Spannblock nach einem der vorangehenden Ansprüche, wobei die erste innere Kühlmittelkanalstruktur (121) und die zweite innere Kühlmittelkanalstruktur (131) getrennt voneinander ausgebildet sind.

4. Spannblock nach einem der vorangehenden Ansprüche, wobei die ersten Kühlmitteleintrittsöffnungen (122, 123, 124) eine Kühlmitteleintrittsöffnung (122) an der zweiten Stirnseite (102) des Spannblocks (100) aufweisen.

5. Spannblock nach einem der vorangehenden Ansprüche, wobei die zweiten Kühlmitteleintrittsöffnungen (132, 133, 134) eine Kühlmitteleintrittsöffnung (132) an der ersten Stirnseite (101) des Spannblocks (100) aufweisen.

6. Spannblock nach einem der vorangehenden Ansprüche, wobei die ersten Kühlmitteleintrittsöffnungen (122, 123, 124) eine Kühlmitteleintrittsöffnung (123) zum Anschluss eines Kühlmittelschlauches an einer Unterseite (103) des Spannblocks (100) aufweisen.

7. Spannblock nach einem der vorangehenden Ansprüche, wobei die zweiten Kühlmitteleintrittsöffnungen (132, 133, 134) eine Kühlmitteleintrittsöffnung (133) zum Anschluss eines Kühlmittelschlauches an einer Unterseite (103) des Spannblocks (100) aufweisen.

8. Spannblock nach einem der vorangehenden Ansprüche, wobei der Spannblock (100) einen Einspannabschnitt (140) zur Einspannung in einer maschinenseitigen Halterung für den Spannblock (100) aufweist und die ersten Kühlmitteleintrittsöffnungen (122, 123, 124) eine an einer Unterseite des Einspannabschnittes (140) ausgebildete Kühlmitteleintrittsöffnung (124) zur direkten Übergabe von Kühlmittel von einer Kühlmittelübergabeöffnung in der Halterung zu dem Spannblock (100) aufweisen.

9. Spannblock nach einem der vorangehenden Ansprüche, wobei der Spannblock (100) einen Einspannabschnitt (140) zur Einspannung in einer maschinenseitigen Halterung für den Spannblock (100) aufweist und die zweiten Kühlmitteleintrittsöffnungen (132, 133, 134) eine an einer Unterseite des Einspannabschnittes (140) ausgebildete Kühlmitteleintrittsöffnung (134) zur direkten Übergabe von Kühlmittel von einer Kühlmittelübergabeöffnung in der Halterung zu dem Spannblock (100) aufweisen.

10. Spannblock nach einem der Ansprüche 8 oder 9, wobei die an der Unterseite des Einspannabschnittes (140) ausgebildete Kühlmitteleintrittsöffnung (124, 134) länglich ausgebildet ist.

11. Spannblock nach einem der Ansprüche 8 bis 10, wobei die an der Unterseite des Einspannabschnittes (140) ausgebildete Kühlmitteleintrittsöffnung (124, 134) von einer umlaufenden Nut (125, 135) umgeben ist, in der ein elastisches Dichtelement angeordnet ist.

12. Spannblock nach einem der vorangehenden Ansprüche, wobei die erste Kühlmittelaustrittsöffnung (120) länglich ausgebildet ist.

13. Spannblock nach einem der vorangehenden Ansprüche, wobei die erste Kühlmittelaustrittsöffnung (120) von einer umlaufenden Nut (128) umgeben ist, in der ein elastisches Dichtelement angeordnet ist.

14. Spannblock nach einem der vorangehenden Ansprüche, wobei die zweite Kühlmittelaustrittsöffnung (130) länglich ausgebildet ist.

15. Spannblock nach Anspruch 14, wobei die zweite Kühlmittelaustrittsöffnung (130) von einer umlaufenden Nut (138) umgeben ist, in der ein elastisches Dichtelement angeordnet ist.

## Claims

1. A clamping block (100) for receiving a parting blade having an internal coolant guide, wherein the clamping block has:
a parting blade seat (110) having a contact face (111) for a lateral face of the parting blade, and clamping jaws (112, 113) which for chucking the parting blade on the clamping block extend on opposite longitudinal sides of the contact face (111);
wherein the clamping block (100) is configured for receiving the parting blade in a first installation direction in which the parting blade by way of a cutter portion projects from a first end side (101) of the clamping block, and in a second installation direction in which the parting blade by way of the cutter portion projects from a second end side (102) of the clamping block that is opposite the first end side (101);
wherein a first coolant exit opening (120) for transferring coolant from the clamping block (100) into the parting blade when installing in the first installation direction, and a second coolant exit opening (130) for transferring coolant from the clamping block (100) into the parting blade when installing in the second installation direction, are configured on the contact face (111);
**characterized in that** the clamping block (100) has at least two different first coolant entry openings (122, 123, 124) and
a first internal coolant duct structure (121) by way of which the first coolant exit opening (120) is connectable so as to communicate with the at least two different first coolant entry openings (122, 123, 124) of the clamping block (100) is configured in the clamping block (100),
and wherein the clamping block (100) has at least two different second coolant entry openings (132, 133, 134) and a second internal coolant duct structure (131) by way of which the second coolant exit opening (130) is connectable so as to communicate with the at least two different second coolant entry openings (132, 133, 134) of the clamping block (100) is configured in the clamping block (100).

2. The clamping block as claimed in claim 1, wherein the first internal coolant duct structure (121) is configured in such a manner that the first coolant exit opening (120) is connectable to at least three different first coolant entry openings (122, 123, 124) of the clamping block (100), and
the second internal coolant duct structure (131) is configured in such a manner that the second coolant exit opening (130) is connectable to at least three different second coolant entry openings (132, 133, 134) of the clamping block (100).

3. The clamping block as claimed in one of the preceding claims, wherein the first internal coolant duct structure (121) and the second internal coolant duct structure (131) are configured so as to be separate from one another.

4. The clamping block as claimed in one of the preceding claims, wherein the first coolant entry openings (122, 123, 124) have a coolant entry opening (122) on the second end side (102) of the clamping block (100).

5. The clamping block as claimed in one of the preceding claims, wherein the second coolant entry openings (132, 133, 134) have a coolant entry opening (132) on the first end side (101) of the clamping block (100).

6. The clamping block as claimed in one of the preceding claims, wherein the first coolant entry openings (122, 123, 124) have a coolant entry opening (123) for connecting a coolant hose on a lower side (103) of the clamping block (100).

7. The clamping block as claimed in one of the preceding claims, wherein the second coolant entry openings (132, 133, 134) have a coolant entry opening (133) for connecting a coolant hose on a lower side (103) of the clamping block (100).

8. The clamping block as claimed in one of the preceding claims, wherein the clamping block (100) has a chucking portion (140) for chucking in a machine-side mounting for the clamping block (100), and the first coolant entry openings (122, 123, 124) for transferring coolant directly from a coolant transfer opening in the mounting to the clamping block (100) have a coolant entry opening (124) that is configured on a lower side of the chucking portion (140).

9. The clamping block as claimed in one of the preceding claims, wherein the clamping block (100) has a chucking portion (140) for chucking in a machine-side mounting for the clamping block (100), and the second coolant entry openings (132, 133, 134) for transferring coolant directly from a coolant transfer opening in the mounting to the clamping block (100) have a coolant entry opening (134) that is configured on a lower side of the chucking portion (140).

10. The clamping block as claimed in one of claims 8 or 9, wherein the coolant entry opening (124, 134) that is configured on the lower side of the chucking portion (140) is configured so as to be elongate.

11. The clamping block as claimed in one of claims 8 to 10, wherein the coolant entry opening (124, 134) that is configured on the lower side of the chucking portion (140) is surrounded by an encircling groove (125, 135) in which an elastic sealing element is disposed.

12. The clamping block as claimed in one of the preceding claims, wherein the first coolant exit opening (120) is configured so as to be elongate.

13. The clamping block as claimed in one of the preceding claims, wherein the first coolant exit opening (120) is surrounded by an encircling groove (128) in which an elastic sealing element is disposed.

14. The clamping block as claimed in one of the preceding claims, wherein the second coolant exit opening (130) is configured so as to be elongate.

15. The clamping block as claimed in claim 14, wherein the second coolant exit opening (130) is surrounded by an encircling groove (138) in which an elastic sealing element is disposed.

## Revendications

1. Bloc de serrage (100) pour recevoir une lame de rainurage avec guidage de réfrigérant interne, le bloc de serrage comprenant :
un siège de lame de rainurage (110) ayant une surface d'appui (111) pour une surface latérale de la lame de rainurage et des mors de serrage (112, 113) s'étendant sur des côtés longitudinaux opposés de la surface d'appui (111) pour serrer la lame de rainurage sur le bloc de serrage,
dans lequel le bloc de serrage (100) est configuré pour recevoir la lame de rainurage dans une première direction de montage, dans laquelle la lame de rainurage fait saillie avec une section de coupe d'un premier côté frontal (101) du bloc de serrage, et dans une deuxième direction de montage, dans laquelle la lame de rainurage fait saillie avec la section de coupe d'un deuxième côté frontal (102) du bloc de serrage, opposé au premier côté frontal (101),
dans lequel sont formées sur la surface d'appui (111) une première ouverture de sortie de réfrigérant (120) pour le transfert de réfrigérant du bloc de serrage (100) dans la lame de rainurage lors d'un montage dans la première direction de montage et une deuxième ouverture de sortie de réfrigérant (130) pour le transfert de réfrigérant du bloc de serrage (100) dans la lame de rainurage lors d'un montage dans la deuxième direction de montage,
**caractérisé en ce que** le bloc de serrage (100) présente au moins deux premières ouvertures d'entrée de réfrigérant différentes (122, 123, 124), et une première structure de canal de réfrigérant interne (121) est formée dans le bloc de serrage (100), par l'intermédiaire de laquelle la première ouverture de sortie de réfrigérant (120) peut être reliée en communication aux au moins deux premières ouvertures d'entrée de réfrigérant différentes (122, 123, 124) du bloc de serrage (100),
et dans lequel le bloc de serrage (100) présente au moins deux deuxièmes ouvertures d'entrée de réfrigérant différentes (132, 133, 134) et une deuxième structure de canal de réfrigérant interne (131) est formée dans le bloc de serrage (100), par l'intermédiaire de laquelle la deuxième ouverture de sortie de réfrigérant (130) peut être reliée en communication aux au moins deux deuxièmes ouvertures d'entrée de réfrigérant différentes (132, 133, 134) du bloc de serrage (100).

2. Bloc de serrage selon la revendication 1, dans lequel la première structure de canal de réfrigérant interne (121) est configurée de telle sorte que la première ouverture de sortie de réfrigérant (120) peut être reliée à au moins trois premières ouvertures d'entrée de réfrigérant différentes (122, 123, 124) du bloc de serrage (100), et
la deuxième structure de canal de réfrigérant interne (131) est configurée de telle sorte que la deuxième ouverture de sortie de réfrigérant (130) peut être reliée à au moins trois deuxièmes ouvertures d'entrée de réfrigérant différentes (132, 133, 134) du bloc de serrage (100).

3. Bloc de serrage selon l'une quelconque des revendications précédentes, dans lequel la première structure de canal de réfrigérant interne (121) et la deuxième structure de canal de réfrigérant interne (131) sont formées séparément l'une de l'autre.

4. Bloc de serrage selon l'une quelconque des revendications précédentes, dans lequel les premières ouvertures d'entrée de réfrigérant (122, 123, 124) présentent une ouverture d'entrée de réfrigérant (122) sur le deuxième côté frontal (102) du bloc de serrage (100) .

5. Bloc de serrage selon l'une quelconque des revendications précédentes, dans lequel les deuxièmes ouvertures d'entrée de réfrigérant (132, 133, 134) présentent une ouverture d'entrée de réfrigérant (132) sur le premier côté frontal (101) du bloc de serrage (100) .

6. Bloc de serrage selon l'une quelconque des revendications précédentes, dans lequel les premières ouvertures d'entrée de réfrigérant (122, 123, 124) présentent une ouverture d'entrée de réfrigérant (123) pour le raccordement d'un tuyau de réfrigérant à un côté inférieur (103) du bloc de serrage (100).

7. Bloc de serrage selon l'une quelconque des revendications précédentes, dans lequel les deuxièmes ouvertures d'entrée de réfrigérant (132, 133, 134) présentent une ouverture d'entrée de réfrigérant (133) pour le raccordement d'un tuyau de réfrigérant à un côté inférieur (103) du bloc de serrage (100).

8. Bloc de serrage selon l'une quelconque des revendications précédentes, dans lequel le bloc de serrage (100) présente une section de serrage (140) pour le serrage dans un support côté machine pour le bloc de serrage (100), et les premières ouvertures d'entrée de réfrigérant (122, 123, 124) présentent une ouverture d'entrée de réfrigérant (124) formée sur un côté inférieur de la section de serrage (140) pour le transfert direct de réfrigérant depuis une ouverture de transfert de réfrigérant dans le support vers le bloc de serrage (100).

9. Bloc de serrage selon l'une quelconque des revendications précédentes, dans lequel le bloc de serrage (100) présente une section de serrage (140) pour le serrage dans un support côté machine pour le bloc de serrage (100), et les deuxièmes ouvertures d'entrée de réfrigérant (132, 133, 134) présentent une ouverture d'entrée de réfrigérant (134) formée sur un côté inférieur de la section de serrage (140) pour le transfert direct de réfrigérant depuis une ouverture de transfert de réfrigérant dans le support vers le bloc de serrage (100).

10. Bloc de serrage selon l'une quelconque des revendications 8 ou 9, dans lequel l'ouverture d'entrée de réfrigérant (124, 134) formée sur le côté inférieur de la section de serrage (140) est configurée sous forme allongée.

11. Bloc de serrage selon l'une quelconque des revendications 8 à 10, dans lequel l'ouverture d'entrée de réfrigérant (124, 134) formée sur le côté inférieur de la section de serrage (140) est entourée d'une rainure périphérique (125, 135) dans laquelle est agencé un élément d'étanchéité élastique.

12. Bloc de serrage selon l'une quelconque des revendications précédentes, dans lequel la première ouverture de sortie de réfrigérant (120) est configurée sous forme allongée.

13. Bloc de serrage selon l'une quelconque des revendications précédentes, dans lequel la première ouverture de sortie de réfrigérant (120) est entourée d'une rainure périphérique (128) dans laquelle est agencé un élément d'étanchéité élastique.

14. Bloc de serrage selon l'une quelconque des revendications précédentes, dans lequel la deuxième ouverture de sortie de réfrigérant (130) est configurée sous forme allongée.

15. Bloc de serrage selon la revendication 14, dans lequel la deuxième ouverture de sortie de réfrigérant (130) est entourée d'une rainure périphérique (138) dans laquelle est agencé un élément d'étanchéité élastique.
